(19) Europäisches Patentamt
European Patent Office
Office européen des brevets

(11) Publication number: **0 345 794 A2**

# (12) EUROPEAN PATENT APPLICATION

(21) Application number: **89110417.6**

(51) Int. Cl.4: **C08F 20/60 , G02B 1/04**

(22) Date of filing: **08.06.89**

(30) Priority: **08.06.88 CS 3974/88**

(43) Date of publication of application:
**13.12.89 Bulletin 89/50**

(84) Designated Contracting States:
**DE FR GB IT SE**

(71) Applicant: **CESKOSLOVENSKA AKADEMIE VED**
**Narodni 3**
**Praha 1(CS)**

(72) Inventor: **Vacik, Jiri, Dipl. Ing. Csc**
**Mechenická 18/2560**
**Praha 4(CS)**
Inventor: **Obereigner, Blahoslav, Dipl. Ing. CSc**
**Podlipami 66**
**Praha 3(CS)**
Inventor: **Soucková, Dana, Dipl. Ing.**
**Sobotecká 5**
**Praha 10(CS)**

(74) Representative: **Patentanwälte Beetz sen. - Beetz jun. Timpe - Siegfried - Schmitt-Fumian- Mayr**
**Steinsdorfstrasse 10**
**D-8000 München 22(DE)**

## (54) Hydrophilic transparent crosslinked copolymers and method for their preparation.

(57) The invention relates to hydrophilic transparent homopolymers and cross-linked copolymers, methods for their production, and the respective monomers. Hydrophilic copolymers can be prepared by copolymerization of monomers of general formula Ia

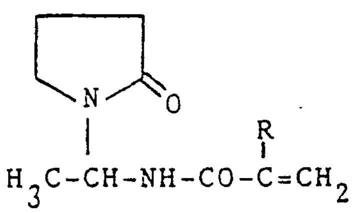

(Ia)

wherein R is hydrogen or methyl, eventually with monomers of general formula IIa

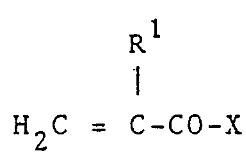

(IIa)

wherein R is hydrogen or methyl, and X is $O-CH_2-CH_2-OH$, $O-CH_2-CH(OH)-CH_3$, $O-CH_2-CH(OH)-CH_2-OH$, $(O-CH_2-CH_2)_2OH$, $(O-CH_2-CH_2)_3OH$, $O-C_nH_{2n+1}$ with $n$ = 1 to 16, $NH_2$, $NH-CH_2-CH(OH)-CH_3$, $N(C_2H_5)_2$, $NH-t-C_4H_9$, OH, ONa, OK, or $ONH_4$.

The content of monomers of formulae Ia and IIa is preferably 40 to 99.99 %, wherein at least 5 % are monomers of general formula I. The copolymers are preferably cross-linked with 0.01 to 60 % of a cross-linking

EP 0 345 794 A2

agent having at least two olefinic double bonds, in the presence of radical initiators.

The polymers are optimally suited for soft contact lenses and medical purposes.

## Hydrophilic transparent cross-linked copolymers and method for their preparation

The invention relates to hydrophilic transparent cross-linked copolymers which are particularly suitable for the production of soft contact lenses and medical purposes, and to a method of their preparation.

Hydrophilic hydrogel materials used for the production of hydrophilic contact lenses and prepared by cross-linking polymerization of 2-hydroxyethyl methacrylate (HEMA) have several excellent properties, e.g., good mechanical and optical properties, and are physiologically very well tolerated. Certain disadvantages consist in their relatively low permeability for oxygen, which is influenced by the water content of the gel.

It is commonly known that the diffusion of oxygen is increased by increasing the water content of the gel. On the other hand, however the mechanical properties of the hydrogel may be deteriorated thereby. One of the ways for obtaining more hydrophilic materials, having a higher oxygen permeability, is the copolymerization of less hydrophilic monomers with more hydrophilic monomers, whereby, of course, a sufficient mechanical strength has to be retained. Thus, for example, the hydrophilic properties of poly-HEMA can be improved by copolymerization of HEMA with diethyleneglycol monomethacrylate, glycerol monomethacrylate, or N-vinylpyrrolidone. However, a disadvantage of copolymers of acrylic or methacrylic monomers with N-vinylpyrrolidone is that they contain a high fraction of the corresponding homopolymers due to the insuitable monomer reactivity ratios. Such polymeric products exhibit some unfavourable properties, e.g., a high water extractable portion, or a tendency to phase separation which leads to opacity.

It is the object of the present invention to overcome the above-mentioned prior art deficiencies and to provide hydrophilic and particularly transparent homopolymers and copolymers having good mechanical and optical properties and a high oxygen permeability, without a tendency to phase separation, which can be used for soft contact lenses and medical purposes, on the basis of new monomers, a method for their preparation, and the corresponding monomers.

The above object is achieved according to the claims. The dependent claims relate to preferred embodiments.

The hydrophilic homopolymers and copolymers according to the present invention consist of or comprise monomer units of the general formula I

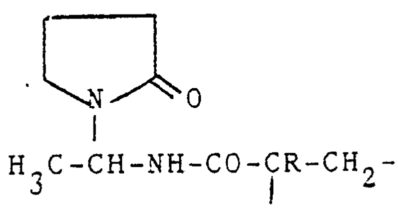

(I)

wherein R is H or $CH_3$.

The substituents R of the monomer units or formula I may be the same or different within the macromolecular claims. In the latter case, the compounds are homologous copolymers.

According to a preferred embodiment, the copolymers comprise or consist of monomer units of the general formula I and monomer units of the general formual II

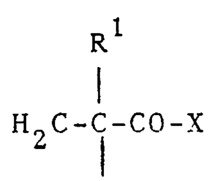

(II)

wherein

$R^1$ is H or $CH_3$,

and

X is $O\text{-}CH_2\text{-}CH_2\text{-}OH$, $O\text{-}CH_2\text{-}CH(OH)\text{-}CH_3$, $O\text{-}CH_2\text{-}CH(OH)\text{-}CH_2\text{-}OH$, $(O\text{-}CH_2\text{-}CH_2)_2OH$, $(O\text{-}CH_2\text{-}CH_2)_3OH$, $O\text{-}C_nH_{2n+1}$ with $_n$ = 1 to 16, $NH_2$, $NH\text{-}CH_2\text{-}CH(OH)\text{-}CH_3$, $N(C_2H_5)_2$, $NH\text{-}t\text{-}C_4H_9$, OH, ONa, OK, or $ONH_4$.

Also in this case, the substituents $R^1$ and/or X may be the same or different within the macromolecular

claims.

According to preferred embodiments, the substituents R of the monomer units of formula I and eventually the substituents $R^1$ and X of the monomer units of formula II are each the same within the macromolecular claims.

In accordance with another embodiment of the present invention, the copolymers consist of

(A) comonomer units of formula I or comonomer units of formula I and comonomer units of formula II, and

(B) comonomer units from a cross-linking agent comprising at least two olefinic double bonds in the molecule.

The content of monomer component A is preferably at least 40 mass-%, based on the total copolymer mass, whereby the monomer component A comprises at least 5 mass-% of monomer units of formula I, based on the total mass of monomer component A.

The content of monomer component A is preferably 40 to 99.99 mass-%, and the content of the cross-linking agent B is preferably 0.01 to 60 mass-%, based on the total copolymer mass.

Preferred copolymers according to the present invention consist of

(A1) 15 to 25 mass-% of monomer units of formula I,

(A2) 75 to 85 mass-% of monomer units of formula II, particularly with $R^1$ being $CH_3$, and X being $O-CH_2-CH_2-OH$,

and

(B) 0.1 to 0.5 mass-% of a cross-linking agent,

based on the total copolymer mass.

Transparent hydrophilic copolymers according to the invention preferably consist of

(A1) 45 to 55 mass-% of monomer units of formual I,

(A2) 45 to 55 mass-% of monomer units of formula II, particularly with $R^1$ being $CH_3$, and X being $O-CH_2-CH_2-OH$,

and

(B) 0.1 to 1 mass-% of a cross-linking agent,

based on the total copolymer mass.

Further embodiments relate to transparent hydrophilic copolymers consisting of 97 to 99.7 mass-% of monomer units of formula I and 0.3 to 3 mass-% of a cross-linking agent, based on the total copolymer mass.

The method for producing the hydrophilic homopolymers and copolymers according to the invention is characterized by radically initiated or photoinitiated polymerization/copolymerization of one or two monomers of the general formula I a

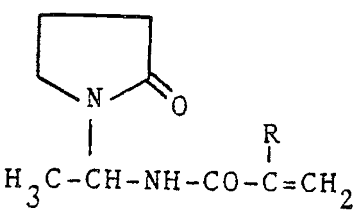

(Ia)

wherein R is H or $CH_3$. In accordance with a preferred embodiment, the method is characterized by copolymerisation of one or two monomers of formula Ia with one or more of monomers of the general formula IIa

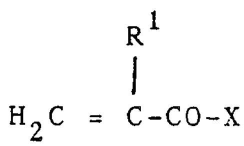

(IIa)

wherein are:

$R^1$ or H or $CH_3$,

and

X O-$CH_2$-$CH_2$-OH, O-$CH_2$-CH(OH)-$CH_3$, O-$CH_2$-CH(OH)-$CH_2$-OH, $-(O-CH_2-CH_2)_2OH$, $-(O-CH_2-CH_2)_3OH$, O-$C_nH_{2n+1}$ with $_n$ = 1 to 16, $NH_2$, NH-$CH_2$-CH(OH)-$CH_3$, $N(C_2H_5)_2$, NH-t-$C_4H_9$, OH, ONa, OK, or $ONH_4$.

A preferred method is characterized by copolymerization of

(A) a monomer component consisting of one or two monomers of formula Ia or of one or two monomers of formual Ia and one or more of monomers of formula IIa,

and

(B) a cross-linking agent comprising at least two olefinic double bonds in the molecule.

The monomer component A is preferably used in an amount of at least 40 mass-%, based on the total monomer mass, whereby the monomer component A preferably comprises at least 5 mass-% of monomer(s) of formula Ia, based on the total mass of component A.

In accordance with another preferred embodiment, a comonomer mixture is used which comprises 40 to 99.99 mass-% of monomer component A and 0.01 to 60 mass-% of cross-linking agent B, based on the total monomer mass.

Advantageous copolymerization systems comprise a monomer mixture consisting of

(1) 15 to 25 mass-% of monomer(s) of formula Ia,

75 to 85 mass-% of monomer(s) of formula IIa, particularly with $R^1$ being $CH_3$, and Y being O-$CH_2$-$CH_2$-OH,

and

0.1 to 0.5 mass-% of a cross-linking agent,

or

(2) 45 to 55 mass-% of monomer(s) of formula Ia,

45 to 55 mass-% of monomer(s) of formula IIa, particularly with $R^1$ being $CH_3$, and X being O-$CH_2$-$CH_2$-OH,

and

0.1 to 1 mass-% of a cross-linking agent,

or

(3) 97 to 99.7 mass-% of monomer(s) of formula Ia,

and

0.3 to 3 mass-% of a cross-linking agent,

each of the combinations being based on the total mass of the monomer mixture.

The copolymer obtained from the above monomer mixture 1 contains, after swelling with water, about 50 mass-% of water.

The copolymer obtained from above monomer mixture 2 has, after swelling with water, a water content of about 75 mass-%, whereas the copolymer obtained from above monomer mixture 3 has a water content of about 86 mass-% after swelling with water.

The monomers according to the present invention have the general formula Ia

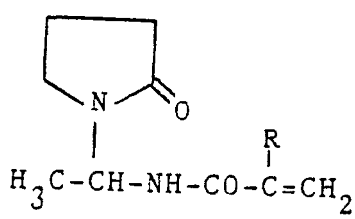

(Ia)

wherein R is hydrogen oder methyl.

These monomers are polymerized either alone or in the form of mixtures thereof or are copolymerized together with monomers of the general formula IIa

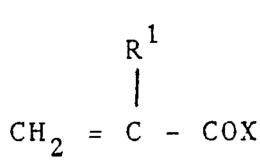

(IIa)

wherein $R^1$ is hydrogen or methyl,

and

x is O-$CH_2$-$CH_2$-OH, O-$CH_2$-CH(OH)-$CH_3$, O-$CH_2$-CH(OH)-$CH_2$-OH, $-(O-CH_2-CH_2)_2OH$, $-(O-CH_2-CH_2)_3OH$,

$O\text{-}C_nH_{2n+1}$ with $_n$ = 1 to 16, $NH_2$, $NH\text{-}CH_2\text{-}CH(OH)\text{-}CH_3$, $N(C_2H_5)_2$, $NH\text{-}t\text{-}C_4H_9$, OH, ONa, OK, or $ONH_4$.

The monomers of general formula Ia contain in their structure an alkylpyrrolidone grouping increasing the hydrophilicity of corresponding macromolecules similarly to N-vinylpyrrolidone, however, are free from its disadvantages concerning the above-mentioned low ability to copolymerize with acrylic or methacrylic acid derivatives. The copolymerization of monomers of the general formula Ia with highly hydrophilic monomers, such as diethylene glycol monomethacrylate and 2,3-dihydroxypropyl methacrylate, does not always give materials with improved hydrophilic properties. Nevertheless, the new polymeric materials obtained according to the invention may be advantageously employed for soft contact lenses and some medical applications. Another advantage is, that the monomers of general formula Ia are crystalline compounds which can be easily prepared in a high purity.

The monomer of general formula Ia wherein R is hydrogen, can be prepared according to R.A. Hickner et al., J. Org. Chem. 32 (1976) 729 and CA-A-993 877; the monomer of general formula I, wherein R is methyl may be prepared analogously by this method by using anhydrous aluminum trichloride or a mixture of boron trifluoride etherate with p-toluenesulfonic acid as catalysts. This monomer has a melting point of 112 - 113 °C.

The cross-linking agent is advantageously selected from multifunctional esters and amides of acrylic and methacrylic acid.

The polymerization reactions are generally carried out by a radical mechanism (either thermally or photo initiated) in a manner known as such. The specific choice of the initiator is not decisive for the polymerization.

Radical polymerization initiators may be selected e.g. from azo compounds, peroxides, peroxocarbonates, persulfates, photoinitiators based on benzoin ethers and their derivatives, or redox initiation systems, advantageously e.g. from persulfate/disulfate, persulfate/ascorbic acid, persulfite/alkylamines, and benzoyl peroxide/alkylamines.

The copolymerization can be carried out without solvent or in the presence of one or more polar solvents. Suitable polar solvents are e.g. glycerol, glycols and their derivatives, water, dimethylformamide, diacetine, 2-propanol, and their mixtures.

The copolymerization may be carried out at the same time with molding, for example, by centrifugal casting or casting in open and closed molds, one part of which advantageously being movable.

If the copolymerization is carried out in the absence of polar solvents, the resulting copolymer block is above all suitable for such applications which require additional mechanical working (for example, production of contact lenses prepared by turning). But some shaped articles can be prepared directly by this bulk copolymerization.

The copolymers obtained in the presence of individual polar solvents or their mixtures mentioned above, contain a predetermined, appropriate content of the solvent and are suitable for casting, e.g., for centrifugal casting of contact lenses. The used solvent, which would prevent from mechanical working in the first case, favourably influences here, on the contrary, pressures and stress effects which appear at swelling of such shaped articles.

It is also possible and suitable in the production of higher swelling turned contact lenses, to extract the solvent or water-soluble low-molecular mass fractions present in the cross-linked copolymer, which was prepared in the presence of polar solvents, with water and then to dry the copolymer to constant mass. The resulting xerogel is perfectly suited for mechanical working. In this case it is advantageous to carry out the drying in a medium of saturated steam heated above the glass-transition temperature $T_g$ of the prepared copolymer.

This procedure is advantageous, because, in contrast to the methods for production of contact lenses from various types of xerogels hitherto used, it not only enables to remove low-molecular mass components completely by washing as explained above, but also provides a more ordered structure during polymerization from the point of view of inner stresses of cross-links. This ordered structure is retained during drying and after reswelling of the respective shaped articles, e.g. contact lenses made from xerogels prepared in this way. The three-dimensional structure without internal stresses obtained as a consequence of the ordered structure of cross-links can be visualized in polarized light. In this method of preparation also a high conversion of polymerizing components is achieved in contrast to the preparation of xerogel materials by polymerization without solvent.

The copolymers according to the invention have good mechanical properties and are suitable for many applications particularly for soft contact lenses and numerous medical applications as biocompatible materials. The copolymers according to the invention are practically free from water soluble extracts and comprise a sufficiently large content of water in the resulting gel under equilibrium conditions, so that they can be used for the production of contact lenses and other medical articles.

The invention is further illustrated by way of examples where the following abbreviations are used:

PEA N-[1-(2-oxo-1-pyrrolidinyl)-ethyl]-acrylamide (the compound of general formula I, wherein R is hydrogen)

PEM N-[1-(2-oxo-1-pyrrolidinyl)-ethyl]-methacrylamide (the compound of general formula I, wherein R is methyl)

MBA methylene-bis(acrylamide)

HEMA 2-hydroxyethyl methacrylate

HEA 2-hydroxyethyl acrylate

EDMA ethylene glycol dimethacrylate

AIBN azo-bis-isobutyronitrile

Unless otherwise indicated, all percentages are by mass.

**Example 1**

A mixture of 29.7 % of PEA, 0.3 % of MBA and 70 % of water was polymerized with 0.05 % of $(NH_4)_2S_2O_8$ (calculation based on the total mass of the mixture) at 70 °C for 16 hours in an inert atmosphere. The obtained polymer was transparent and elastic and had a shear modulus G of 0.0043 MPa. The equilibrium content of water in the obtained gel was 92 %.

Example 2

A mixture of 49.7 % of PEA, 0.3 % of MBA and 50 % of water was polymerized with 0.05 % of $(NH_4)_2S_2O_8$ (calculation based on the total mass of the mixture) at 70° C for 16 hours in an inert atmosphere. The obtained polymer was transparent and elastic and had a shear modulus G of 0.016 MPa and an equilibrium content of water of 86 %.

Example 3

A mixture of 12 % of PEA, 87.7 % of HEMA and 0.3 % of EDMA was polymerized with 0.2 % of AIBN (calculation based on the total mass of the mixture) at 60° C for 16 hours in an inert atmosphere. The equilibrium content of water in the obtained gel was 44 %. The gel was clear and elastic and had a shear modulus G of 0.170 MPa.

Example 4

A mixture of 12 % of PEA, 87.05 % of HEMA and 0.95 % of diethylene glycol dimethacrylate was polymerized with 0.2 % of AIBN (calculation based on the total mass of the mixture) at 60 °C for 16 hours in an inert atmosphere. The equilibrium content of water in the obtained gel was 41 %. The gel was clear and elastic and had a shear modulus G of 0.180 MPa.

Example 5

A mixture of 46.23 % of PEA, 11.6 % of HEMA, 0.17 % of EDMA and 42 % of water was polymerized with 0.5 % of AIBN (calculation based on the total mass of the mixture) at 60° C for 16 hours in an inert atmosphere. The equilibrium content of water in the obtained gel was 87 %. The gel was clear and elastic and had a shear modulus G of 0.030 MPa.

Example 6

A mixture of 22.4 % of PEA, 33.43 % of HEMA, 0.17 % of EDMA and 45 % of water was polymerized with 0.5 % of AIBN (calculation based on the total mass of the mixture) at 60° C for 16 hours in an inert atmosphere. The equilibrium content of water in the obtained gel was 83 %. The gel was clear and elastic

and had a shear modulus G of 0.030 MPa.

Example 7

A mixture of 41.00 % of HEMA, 28 % of PEA, 1 % of triethylene glycol dimethacrylate and 30 % of water was polymerized with 0.5 % of AIBN (calculation based on the total mass of the mixture) at 60° C for 16 hours in an inert atmosphere. The equilibrium content of water in the obtained gel was 73 %. The gel was clear and elastic and had a shear modulus G of 0.060 MPa.

Example 8

A mixture of 20 % of PEA, 29.85 % of HEMA, 0.15 % of EDMA and 50 % of water was polymerized with 0.5 % of AIBN (calculation based on the total mass of the mixture) at 60° C for 16 hours in an inert atmosphere. The equilibrium content of water in the obtained gel was 78 %. The gel was clear and elastic and had a shear modulus G of 0.040 MPa.

Example 9

A mixture of 14 % of PEA, 55.79 % of HEMA, 0.21 % of EDMA and 30 % of water was polymerized with 0.5 % of AIBN (calculation based on the total mass of the mixture) at 60° C for 16 hours in an inert atmosphere. The equilibrium content of water in the obtained gel was 53 %. The gel was clear and elastic and had a shear modulus G of 0.110 MPa.

Example 10

A mixture of 10 % of PEA, 39.85 % of HEMA, 0.15 % of EDMA and 50 % of dimethylformamide was polymerized with 0.2 % of AIBN (calculation based on the total mass of the mixture) at 60° C for 16 hours in an inert atmosphere. The equilibrium content of water in the obtained gel was 54 %. The gel was clear and elastic and had a shear modulus G of 0.056 MPa.

Example 11

A mixture of 10 % of PEA, 39.00 % of diethylene glycol monomethacrylate (DEGMA), 1.00 % of diethylene glycol dimethacrylate and 50 % of dimethyl sulfoxide was polymerized with 0.2 % of AIBN (calculation based on the total mass of the mixture ) at 60° C for 16 hours in an inert atmosphere. The equilibrium content of water in the obtained gel was 64 %. The gel was clear and elastic and had a shear modulus G of 0.056 MPa.

Example 12

A mixture of 15 % of PEM, 34.85 % of HEMA, 0.15 % of EDMA and 50 % of dimethyl sulfoxide was polymerized with 0.2 % of AIBN (calculation based on the total mass of the mixture) at 60° C for 16 hours in an inert atmosphere. The equilibrium content of water in the obtained gel was 65 %. The gel was clear and elastic and had a shear modulus G of 0.955 MPa.

Example 13

A mixture of 55.79 % of HEMA, 14 % of PEA, 0.21 % of EDMA and 30 % of water was polymerized with 0.5 % of AIBN (calculation based on the total mass of the mixture) at 60° C for 16 hours in an inert atmosphere. The equilibrium content of water in the obtained gel was 51 %. The gel was clear and elastic and had a refraction index at 25° C $n_{25}$ of 1.407, a tensile strength of 0.217 MPa and an elongation of 146

% (based on initial length).

Example 14

A mixture of 17.5 % of PEA, 52.29 % of HEMA, 0.21 % of EDMA and 30 % of water was polymerized with 0.5 % of AIBN (calculation based on the total mass of the mixture) at 60° C for 16 hours in an inert atmosphere. The equilibrium content of water in the obtained gel was 56 %. The gel was clear and elastic and had a refraction index $n_{25}$ of 1.398, a tensile strength of 0.166 MPa and an elongation of 150 % (based on initial length).

Example 15

A mixture of 21 % of PEA, 48.79 % of HEMA, 0.21 % of EDMA and 30 % of water was polymerized with 0.5 % of AIBN (calculation based on the total mass of the mixture) at 60° C for 16 hours in an inert atmosphere. The equilibrium content of water in the obtained gel was 61 %. The gel was clear and elastic and had a refraction index $n_{25}$ of 1.391, a tensile strength of 0.179 MPa and an elongation of 168 % (based on initial length).

Example 16

A mixture of 28 % of PEM, 41.79 % of HEMA, 0.21 % of hexamethylene bis(acrylamide) and 30 % of water was polymerized with 0.5 % of AIBN (calculation based on the total mass of the mixture) at 60° C for 16 hours in an inert atmosphere. The equilibrium content of water in the obtained gel was 62 %. The gel was clear and elastic and had a refraction index $n_{25}$ of 1.379, a tensile strength of 0.092 MPa and an elongation of 98 % (based on initial length).

Example 17

A mixture of 35 % of PEA, 34.79 % of HEMA, 0.21 % of EDMA and 30 % of water was polymerized with 0.5 % of AIBN (calculation based on the total mass of the mixture) at 60° C for 16 hours in an inert atmosphere. The equilibrium content of water in the obtained gel was 75 %. The gel was clear and elastic and had a refraction index $n_{25}$ of 1.371, a tensile strength of 0.060 MPa and an elongation of 64 % (based on initial length).

Example 18

A mixture of 17.3 % of PEA, 52 % of HEMA, 0.7 % of EDMA and 30 % of water was polymerized with 0.5 % of AIBN (calculation based on the total mass of the mixture) at 60° C for 16 hours in an inert atmosphere. The equilibrium content of water in the obtained gel was 52 %. The gel was clear and elastic and had a refraction index $n_{25}$ of 1.410, a tensile strength of 0.157 and an elongation of 43 % (based on initial length).

Example 19

A mixture of 17 % of PEA, 50.9 % of HEMA, 2.1 % of EDMA and 30 % of water was polymerized with 0.5 % of AIBN (calculation based on the total mass of the mixture) at 60° C for 16 hours in an inert atmosphere. The equilibrium content of water in the obtained gel was 43 %. The gel was clear and elastic and had a refraction index $n_{25}$ of 1.428, a tensile strength of 0.218 MPa and an elongation of 16 % (based on initial length).

Example 20

A mixture of 16.6 % of PEA, 49.9 % of HEMA, 3.5 % of EDMA and 30 % of water was polymerized with 0.5 % of AIBN (calculation based on the total mass of the mixture) at 60° C for 16 hours in an inert atmosphere. The equilibrium content of water in the obtained gel was 37 %. The gel was clear and elastic and had a refraction index n of 1.439, a tensile strength of 0.312 MPa and an elongation of 16 % (based on initial length).

Example 21

A mixture of 18.75 % of PEA, 56.03 % of HEMA, 0.22 % of EDMA and 25 % of water was polymerized with 0.5 % of AIBN (calculation based on the total mass of the mixture) at 60° C for 16 hours in an inert atmosphere. The equilibrium content of water in the obtained gel was 53 %. The gel was clear and elastic and had a refraction index $n_{25}$ of 1.400, a tensile strength of 0.138 MPa and an elongation of 80 % (based on initial length).

Example 22

A mixture of 15 % of PEA, 44.82 % of HEMA, 0. 18 % of EDMA and 40 % of water was polymerized with 0.5 % of AIBN (calculation based on the total mass of the mixture) at 60° C for 16 hours in an inert atmosphere. The equilibrium content of water in the obtained gel was 56 %. The gel was clear and elastic and had a refraction index $n_{25}$ of 1.398, a tensile strength of 0.105 MPa and an elongation of 82 % (based on initial length).

Example 23

A mixture of 12.5 % of PEA, 37.35 % of HEMA, 0.15 % of EDMA and 50 % of water was polymerized with 0.5 % of AIBN (calculation based on the total mass of the mixture) at 60° C for 16 hours in an inert atmosphere. The equilibrium content of water in the obtained gel was 57 %. The gel was clear and elastic and had a refraction index $n_{25}$ of 1.396, a tensile strength of 0.097 MPa and an elongation of 93 %, based on initial length.

Example 24

Example 13 was repeated with the exception that PEA was replaced by PEM. The obtained gel was clear and elastic and had an equilibrium content of water of 50 % and a refraction index $n_{25}$ of 1.414.

Example 25

Example 14 was repeated with the exception that PEA was replaced by PEM. The obtained gel was clear and elastic and had an equilibrium content of water of 52 % and a refractive index $n_{25}$ of 1.409.

Example 26

Example 15 was repeated with the exception that PEA was replaced by PEM. The obtained gel was clear and elastic and had an equilibrium content of water of 58 % and a refraction index $n_{25}$ of 1.400.

Example 27

Example 16 was repeated with the exception that PEA was replaced by PEM. The obtained gel was clear and elastic and had an equilibrium content of water of 62 % and a refraction index $n_{25}$ of 1.390.

Example 28

Example 17 was repeated with the exception that PEA was replaced by PEM. The obtained gel was clear and elastic and had an equilibrium content of water of 71 % and a refraction index $n_{25}$ of 1.374.

Example 29

Example 18 was repeated with the exception that PEA was replaced by PEM. The obtained gel was clear and elastic and had an equilibrium content of water of 51 % and a refraction index $n_{25}$ of 1.413.

Example 30

Example 19 was repeated with the exception that PEA was replaced by PEM. The obtained gel was clear and elastic and had an equilibrium content of water of 45 % and a refraction index $n_{25}$ of 1.424.

Example 31

A mixture of 50 % of PEA, 0.30 % of EDMA and 49.7 % of water was polymerized with 0.5 % of $(NH_4)_2S_2O_8$ at 70° C. The obtained transparent elastic gel had an equilibrium content of water of 85 %.

Example 32

A mixture of 40 % of PEA, 0.5 % of 3′,3′-ethylidenebis(1-vinyl-2-pyrrolidone), 2 % of methacrylic acid and 57.5 % of $H_2O$ was polymerized with 0.2 % of AIBN (calculation based on the total mass of the monomer mixture) at 60° C for 16 hours. The obtained polymer was an elastic gel with an equilibrium content of water of 78 %.

Example 33

A mixture of 17.27 % of PEM, 49.50 % of HEMA, 31.88 % of $H_2O$ and 1.85 % of EDMA was polymerized with 0.5 % of dicyclohexyl peroxocarbonate (calculation based on the total mass of the mixture) at 60° C for 16 hours. The resulting elastic gel had an equilibrium content of water of 45 %.

Example 34

A mixture of 17 % of PEM, 49 % of DEGMA, 32 % of dimethylsulfoxide and 2 % of diethylene glycol dimethacrylate was polymerized with 0.1 % of diisopropyl peroxocarbonate at 60° C for 16 hours. The obtained hydrophilic gel had an equilibrium content of water of 78 %.

Example 35

A mixture of 31.36 % of PEA, 20.94 % of N-2-hydroxypropylmethacrylamide, 47.55 % of methanol and 0.15 % of MBA was polymerized with 0.4 % of AIBN at 60° C for 16 hours in an inert atmosphere. The equilibrium content of water in the obtained gel was 91 %. The gel was elastic and slightly opalescent.

Example 36

A mixture of 31.48 % of PEA, 21.29 % of diethylacrylamide, 47.08 % of methanol and 0.15 % of MBA was polymerized with 0.4 % of AIBN at 60° C for 16 hours in an inert atmosphere. The equilibrium content of water in the obtained gel was 93 %. The gel was elastic and slightly opalescent.

Example 37

A mixture of 27.11 % of PEA, 18.98 % of MMA, 53.76 % of methanol and 0.15 % of MBA was polymerized with 0.4 % of AIBN at 60° C for 16 hours in an inert atmosphere. The equilibrium content of water in the obtained gel was 77 %. The gel was elastic and slightly opalescent.

Example 38

A mixture of 27.38 % of PEA, 18.30 % of t-butyl methacrylate, 54.1 % of methanol and 0.15 % of MBA was polymerized with 0.4 % of AIBN at 60° C for 16 hours in an inert atmosphere. The equilibrium content of water in the obtained gel was 54 %. The gel was tough and slightly opalescent.

Example 39

A mixture of 10.67 % of PEM, 54.66% of HEMA, 31.57 % of $H_2O$ and 33.10 % of EDMA was polymerized with 0.5 % of AIBN at 60° C for 16 hours in an inert atmosphere. The equilibrium content of water in the obtained gel was 50 %. The gel was elastic and slightly opalescent.

Example 40

A mixture of 30. 88 % of PEM, 45.90% of HEMA, 23.08 % of water and 0.14 % of EDMA was polymerized with 0.5 % of AIBN (calculation based on the total mass of the monomer mixture) at 60° C for 16 hours in an inert atmosphere. The obtained polymer had an equilibrium content of water of 62 % and was clear and elastic.

Example 41

A mixture of 41.11 % of PEM, 27.40 % of HEMA, 31.33 % of water and 0.16 % of EDMA was polymerized with 0.5 % of diisopropyl peroxocarbonate at 60° C for 16 hours. The obtained gel was transparent and elastic and had an equilibrium content of water of 78.3 %.

## Claims

1. Hydrophilic homopolymers and copolymers,
consisting of or comprising monomer units of the general formula I

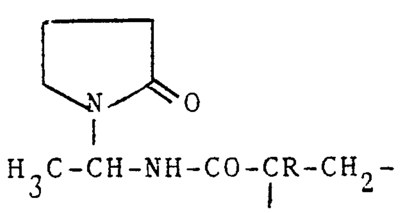

(I)

wherein R is H or $CH_3$, independently for all monomer units of formula I.

2. Hydrophilic copolymers according to claim 1, comprising or consisting of monomer units of the general formula I and monomer units of the general formula II

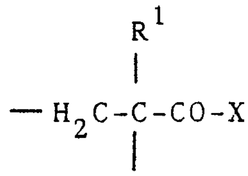

(II)

wherein are independently for all monomer units of formula II:
$R^1$ H or $CH_3$,
and
X $O\text{-}CH_2\text{-}CH_2\text{-}OH$, $O\text{-}CH_2\text{-}CH(OH)\text{-}CH_3$, $O\text{-}CH_2\text{-}CH(OH)\text{-}CH_2\text{-}OH$, $(O\text{-}CH_2\text{-}CH_2)_2OH$, $(O\text{-}CH_2\text{-}CH_2)_3OH$, $O\text{-}C_nH_{2n+1}$ with $n$ = 1 to 16, $NH_2$, $NH\text{-}CH_2\text{-}CH(OH)\text{-}CH_3$, $N(C_2H_5)_2$, $NH\text{-}t\text{-}C_4H_9$, OH, ONa, OK, or $ONH_4$.

3. Copolymers according to claim 1 or 2, consisting of

(A) comonomer units of formula I or comonomer units of formula I and comonomer units for formula II,

and

(B) comonomer units from a cross-linking agent comprising at least two olefinic double bonds in the molecule.

4. Copolymers according to claim 3, wherein the content of monomer component A is at least 40 mass-%, based on the total copolymer mass.

5. Copolymers according to claim 4, comprising at least 5 mass-% of monomer units of formula I, based on the total content of monomer component A.

6. Copolymers according to one of claims 3 to 5, wherein the content of monomer component A is 40 to 99.99 mass-%, and the content of the cross-linking agent B is 0.01 to 60 mass-%, based on the total copolymer mass.

7. Copolymers according to one of claims 1 to 6, consisting of
(A1) 15 to 25 mass-% of monomer units of formula I,
(A2) 75 to 85 mass-% of monomer units of formula II, particularly with $R^1$ being $CH_3$, and X being $O\text{-}CH_2\text{-}CH_2\text{-}OH$,
and
(B) 0.1 to 0.5 mass-% of a cross-linking agent,
based on the total copolymer mass.

8. Transparent hydrophilic copolymers according to one of claims 3 to 6, consisting of
(A1) 45 to 55 mass-% of monomer units of formula I,
(A2) 45 to 55 mass-% of monomer units of formula II, particularly with $R^1$ being $CH_3$, and X being $O\text{-}CH_2\text{-}CH_2\text{-}OH$.
and
(B) 0.1 to 1 mass-% of a cross-linking agent,
based on the total copolymer mass.

9. Transparent hydrophilic copolymers according to one of claims 1 to 6, consisting of 97 to 99.7 mass-% of monomer units of formula I and 0.3 to 3 mass-% of a cross-linking agent, based on the total copolymer mass.

10. The hydrophilic homopolymers and copolymers according to one of claims 3 to 9, wherein the cross-linking agent of monomer component B is selected from multifunctional esters and amides of acrylic and methacrylic acid.

11. A method for producing hydrophilic homopolymers and copolymers, particularly those according to one of claims 1 to 10, characterized by radically initiated or photoinitiated polymerization/copolymerization of one or two monomers of the general formula Ia

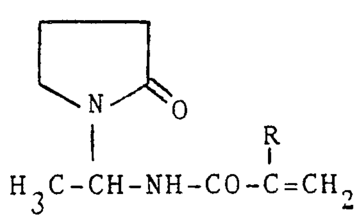

(Ia)

wherein R is H or $CH_3$.

12. The method according to claim 11, characterized by copolymerization of one or two monomers of formula Ia with one or more of monomers of the general formula IIa

$$H_2C = \overset{R^1}{\overset{|}{C}}-CO-X \qquad (IIa)$$

wherein are:
R' H or $CH_3$,
and
X $O-CH_2-CH_2-OH$, $O-CH_2-CH(OH)-CH_3$, $O-CH_2-CH(OH)-CH_2-OH$, $(O-CH_2-CH_2)_2OH$, $(O-CH_2-CH_2)_3OH$, $O-C_nH_{2n+1}$ with $_n$ = 1 to 16, $NH_2$, $NH-CH_2-CH(OH)-CH_3$, $N(C_2H_5)_2$, $NH-t-C_4H_9$, OH, ONa, OK, or $ONH_4$.

13.The method according to claim 11 or 12, characterized by copolymerization of

(A) a monomer component consisting of one or two monomers of formula Ia or of one or two monomers of formula Ia and one or more of monomers of formula IIa,
and
(B) a cross-linking agent comprising at least two olefinic double bonds in the molecule.

14.The method according to claim 13, characterized in that monomer component A is used in an amount of at least 40 mass-%, based on the total monomer mass.

15.The method according to claim 14, characterized in that a monomer component A is used comprising at least 5 mass-% of monomer(s) of formula Ia, based on the mass of component A.

16.The method according to one of claims 13 to 15, characterized in that a comonomer mixture is used comprising 40 to 99.99 mass-% of monomer component A and 0.01 to 60 mass-% of cross-linking agent B, based on the total monomer mass.

17. The method according to one of claims 11 to 16, characterized by polymerization/copolymerization of a monomer mixture consisting of
(1) 15 to 25 mass-% of monomer(s) of formula Ia,
75 to 85 mass-% of monomer(s) of formula IIa, particularly with $R^1$ being $CH_3$, and Y being $O-CH_2-CH_2-OH$,
and
0.1 to 0.5 mass-% of a cross-linking agent,
or
(2) 45 to 55 mass-% of monomer(s) of formula Ia,
45 to 55 mass-% of monomer(s) of formula IIa, particularly with $R^1$ being $CH_3$, and X being $O-CH_2-CH_2-OH$,
and
0.1 to 1 mass-% of a cross-linking agent,
or
(3) 97 to 99.7 mass-% of monomer(s) of formula Ia,
and
0.3 to 3 mass-% of a cross-linking agent,
each of the combinations being based on the total monomer mass.

18. The method according to one of claims 13 to 17, characterized in that the cross-linking agent B is selected from multifunctional esters and amides of acrylic and methacrylic acid.

19. The method according to one of claims 11 to 18, characterized in that
- the copolymerization is carried out in the presence of one or a mixture of polar solvents, particularly selected from glycerol, glycols and their derivatives, diacetine and 2-propanol,
and/or
- the polymerization initiator is selected from radical initiators, particularly azo compounds, peroxides, peroxocarbonates and persulfates, from photoinitiators, particularly benzoin ethers and their derivatives, or from redox initiator systems, particularly persulfate/disulfite, persulfate/ascorbic acid, persulfate/alkylamines, and benzoyl peroxide/alkylamines.

20. The method according to one of claims 11 to 19, characterized in that the polymerization/copolymerization is carried out at the same time with molding.

21. The method according to one of claims 11 to 20, characterized by molding the polymers/copolymers by centrifugal casting or casting in open or closed molds.

22. Use of the polymers/copolymers according to one of claims 1 to 10 for soft contact lenses and medical articles, particularly biocompatible shaped articles.

23. Monomers of the general formula Ia

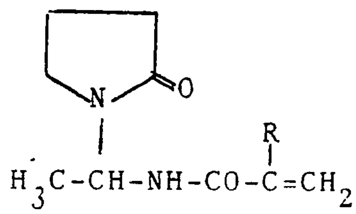

(Ia)

wherein R is H or $CH_3$.